(19) **Europäisches Patentamt**

**European Patent Office**

**Office européen des brevets**

(11) **EP 1 187 134 A2**

(12) **EUROPEAN PATENT APPLICATION**

(43) Date of publication:
**13.03.2002 Bulletin 2002/11**

(51) Int Cl.⁷: **G11B 27/10**, H04N 5/783, H04N 5/781, G11B 27/32

(21) Application number: **01121168.7**

(22) Date of filing: **04.09.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **04.09.2000 JP 2000267608**

(71) Applicant: **Pioneer Corporation
Tokyo-to (JP)**

(72) Inventors:
• **Ono, Masahiro, c/o Pioneer Corp., Ohmori Works
Tokyo-to (JP)**
• **Inazumi, Atsushi, c/o Pioneer Corp.,
Ohmori Works
Tokyo-to (JP)**

• **Adachi, Kazutoshi, c/o Pioneer Corp.,
Ohmori Works
Tokyo-to (JP)**
• **Tanaka, Daisuke, c/o Pioneer Corp.,
Ohmori Works
Tokyo-to (JP)**
• **Saito, Hiroshi, c/o Pioneer Corp., Ohmori Works
Tokyo-to (JP)**
• **Atsuta, Kumiko, c/o Pioneer Corp.,
Ohmori Works
Tokyo-to (JP)**

(74) Representative: **Grünecker, Kinkeldey,
Stockmair & Schwanhäusser Anwaltssozietät
Maximilianstrasse 58
80538 München (DE)**

(54) **Storage and reproduction system, transport stream storage method, and transport stream reproduction method**

(57)     MPEG2-TS (transport streams) are inputted from a digital broadcast receiving unit. At a storage processing unit (26), a program configuration is analyzed, and desired record data is formed. The inputted transport streams are sequentially stored in an MPEG2-TS recording area (3a) of a storage medium (3). At the storage processing unit (26), an access unit to be targeted for special reproduction is analyzed based on the MPEG2-TS, and auxiliary information containing the recording position information is generated.

The generated information is recorded in an auxiliary information recording area (3b) of the storage medium (3). During special reproduction, at the reproduction processing unit (27), the access unit determined based on auxiliary information is read out from the storage medium (3), and the reproduction time information is provided. A reproduction transport stream is configured, and is outputted to a digital broadcast receiving unit. Further, special reproduction is carried out at a predetermined timing.

FIG. 2

**Description**

BACKGROUND OF THE INVENTION

The present invention relates to a technical field of a storage and reproduction system for carrying out storage processing and reproduction processing of a transport stream in which coded data is multiplexed. More particularly, the present invention relates to a technical field of a storage and reproduction (playback) system for carrying out storage and reproduction of an MPEG 2 transport stream configured by employing a TS packet for compressed and coded data in accordance with an MPEG 2 scheme.

In recent years, digital broadcasting in which video data or audio data is digitized and multiplexed to be transmitted is becoming more popular. In the digital broadcasting, an MPEG (Moving Picture Expert Group) scheme is employed as a compression/encoding scheme. In particular, the MPEG 2 scheme, which is capable of supporting a wide range of applications and achieving data transmission with high quality and high efficiency, receives attention as a standard compression/encoding scheme in digital broadcasting. In digital broadcasting using the MPEG 2 scheme, data on a plurality of programs is multiplexed in an MPEG 2 transport stream (hereinafter, referred to as MPEG2-TS) and transmitted. A receiving system for receiving the data is configured to selectively extract desired data. In addition, if a storage and reproduction system is configured to store any data contained in the MPEG2-TS by employing a storage device with a large capacity such as a hard disk, it is possible to reproduce stored data at user's desired timing.

In the meantime, in the case where video data stored in a storage device is reproduced in the storage and reproduction system, it is desirable that a special reproduction processing function supporting fast forward winding or rewinding is provided. Namely, it is required to reproduce only a series of video data (video streams) targeted for special reproduction, our of the video data multiplied in the MPEG2-TS.

However, according to the above described conventional storage and reproduction system, in the case where data is extracted from the storage video streams at random and reproduced, it is required to analyze data at that time, and transfer the resultant data to an MPEG 2 decoding unit. In this case, however, due to a time loss caused by a data analysis time, a speedy operation in the storage and reproduction system cannot be achieved. In addition, in the case where data is stored in an MPEG 2 program stream (hereinafter, referred to as MPEG 2 - PS), which contains a valid parameter for random reproduction in its data structure, it is required to provide a mutual conversion function between the MPEG 2 - PS and the MPEG2-TS, thus increasing a hardware burden. Further, each item of data transferred during a random reproduction operation does not have any correlation that the original video stream has. Thus, control of the MPEG 2 decoding unit becomes special and complicated, which differs from control in normal reproduction.

SUMMARY OF THE INVENTION

The present invention has been made in order to solve the foregoing problem. It is an object of the present invention to provide a storage and reproduction system capable of achieving data transfer in easy conformance with a reproduction condition such as special reproduction without complicating a configuration while carrying out storage processing and reproduction processing of a transport stream, the systemmaking it unnecessary to request special control for a decoding unit.

The above object of the present invention can be achieved by a storage and reproduction system of the present invention for carrying out storage processing and reproduction processing of a transport stream in which coded data is multiplexed. The storage and reproduction system is provided with: a storage control device for, when a storage command is received, sequentially storing coded data in a storage device, said coded data corresponding to the storage command among inputted transport stream; an auxiliary information generating device for analyzing said coded data for each access unit that is an access unit during random reproduction, and generating auxiliary information containing recording position information contained in the storage device: and a reproduction control device for, when a reproduction command under a predetermined reproduction condition is received, selectively determining the access unit that conforms to the reproduction condition as a reproduction target based on the auxiliary information, and reading out the access unit targeted for reproduction from the storage device, thereby configuring and outputting a reproduction transport stream.

According to the present invention, when a storage command of an inputted transport stream is received, the corresponding coded data is sequentially stored in a storage device, and auxiliary information is generated by carrying out analysis for each access unit. Then, when a reproduction command for carrying out special reproduction is received, for example, an access unit targeted for reproduction is determined by referring the auxiliary information, thereby configuring and outputting a reproduction transport stream. Therefore, in the case of carrying out reproduction processing employing part of the stored transport streams, the condition can be uniformly judged based on auxiliary information. Thus, a storage and reproduction system capable of flexibly coping with a special reproduction condition such as special reproduction can be achieved without complicating a configuration.

In one aspect of the present invention, the reproduction control device newly generates configuration information on the reproduction transport stream and a program contained in the reproduction transport stream, and outputs the configuration information with the reproduction transport stream.

According to this aspect, when a reproduction transport stream is inputted to a decoding unit, a data structure and a program structure are analyzed for such a transport stream in the same manner as normal stream decode processing. As a result, desired data can be decoded.

In another aspect of the present invention, the reproduction control device newly generates time reference information on a program contained in the reproduction transport stream, and outputs the time reference information with the reproduction transport stream.

According to this aspect, when a reproduction transport stream is inputted to a decoding unit, a system clock is reproduced for such a transport stream in the same manner as normal stream decode processing. On the resultant time axis, data can be decoded at a desired timing without any inconsistency.

In further aspect of the present invention, the reproduction control device generates reproduction time information for specifying a time for reproducing the access unit targeted for reproduction, and outputs the reproduction time information with the reproduction transport stream.

According to this aspect, when an access unit targeted for reproduction is decided, reproduction time information having coincidence with time reference information generated as described above is generated, and the generated information is outputted with a reproduction transport stream. Therefore, a decode timing and a transfer timing that conforms to a reproduction condition can be set precisely for each access unit, thus enabling time management adaptable to special reproduction or the like.

In further aspect of the present invention, the reproduction transport stream is transmitted by the TS packet, and the reproduction control device generates the reproduction time information based on arrival time information assigned when the respective TS packets are stored.

According to this aspect, a reproduction transport stream is configured of data selected in units of TS packets. During reproduction processing, reproduction time information is generated based on arrival time information on the TS packets. Therefore, reproduction time information can be easily calculated without retrieving/analyzing time axis information that originally exists in stored streams.

In further aspect of the present invention, the reproduction control device generates the reproduction time information in consideration of a frame display replacement in an original video stream of the access unit.

According to this aspect, reproduction time information is generated in consideration of a frame display replacement in an original video stream. Therefore, reproduction time information relevant to an access unit can be calculated precisely.

In further aspect of the present invention, the coded data is video data compressed and coded in accordance with an MPEG 2 scheme, and the access unit targeted for reproduction contained in the reproduction transport stream is obtained as a single video sequence.

According to this aspect, in a storage and reproduction system, a transport stream is composed of coded data based on an MPEG 2 scheme. When each access unit is stored, each access unit is analyzed to be associated with an original video sequence. During reproduction, each access unit is outputted as a single video sequence having an original decoding/reproduction control parameter. Therefore, each access unit targeted for reproduction has its own independence, and serves as a stream that conform to an MPEG Standard, thus preventing complicated control at the decoding unit.

In further aspect of the present invention, coded data on one or more programs having one or more components is multiplexed in the inputted transport stream, and the auxiliary information generating device selectively reconfigures a stream from the inputted transport stream according to designation of the program or component, and generates the auxiliary information where the access unit contained in the stream is defined as an analysis target.

According to this aspect, an inputted transport stream has a multiplied data structure. Then, a new stream is reconfigured from a transport stream corresponding to program specification/component specification, and auxiliary information is generated based on this specification. Therefore, even in the case where an access unit selected from among the transport streams is frequently changed, auxiliary information matching such change is generated. Thus, during special reproduction, for example, an image seen by the user can be configured as one stream, storage processing is simplified, and the required storage capacity can be reduced.

In further aspect of the present invention, the reproduction control device updates a parameter that assigns a storage amount of a virtual input buffer or a decode timing in the access unit targeted for reproduction by referring to a data amount of the access unit, which is targeted for reproduction and is transferred.

According to this aspect, a parameter set for an access unit determined as a reproduction target indicates a storage quantity of a virtual input buffer in such an access unit or a decode timing. Thus, an access unit delivery timing can be determined based on such indication. The parameter is updated so as to be adaptive to a reproduction condition. Therefore, the precision of the access unit delivery timing is improved, and special reproduction with high precision can be achieved.

In further aspect of the present invention, the reproduction control device outputs the reproduction transport stream by associating the update value of the parameter with the reproduction time information.

According to this aspect, if the above parameter is updated, the update value is associated with reproduction time information. Then, a reproduction transport is outputted, and thus, an access unit transmission timing can be easily determined.

In further aspect of the present invention, the reproduction control device configures the reproduction transport stream by assigning each PES packet to the respective access units, and provides the reproduction time information as a PTS of the PES packet,

According to this aspect, time information provided to a reproduction transport stream is directed to time information on a time axis provided to a decoding unit by time reference information. This time information is directed to a PTS provided to a PES packet assigned to each unit access. Therefore, one PTS exists in one access unit. Thus, time management of each access unit in special reproduction or the like is facilitated, and further, precise decode/display timing can be specified.

The above object of the present invention can be achieved by a transport stream storage method for storing a transport stream in which coded data is multiplexed, said transport stream storage method comprising the processes of: sequentially storing coded data in a storage device when a storage command is received, said coded data corresponding to the storage command among inputted transport stream; analyzing said coded data for each access unit that is an access unit during random reproduction; and generating auxiliary information containing recording position information in the storage device.

According to this aspect, in the case of carrying out storage processing of an inputted transport stream, the corresponding coded data is sequentially stored in a storage device, and auxiliary information is generated by carrying out analysis for each access unit. Therefore, in the stored transport stream, the recording position for each access unit can be specified based on auxiliary information. In the case of carrying out later reproduction processing a desired transport stream can be easily configured.

In one aspect of the present invention, coded data on one or more programs having one or more components is multiplexed in the inputted transport stream, and the process of generating auxiliary information selectively reconfigures a stream from inputted transport stream according to designation of the program or component, and generates the auxiliary information where the access unit contained in the stream is defined as an analysis target.

According to this aspect of the present invention, a new stream is reconfigured and auxiliary information is generated in accordance with an advantageous effect similar to that according to the fifth aspect. Thus, for, example, an image seen by the user can be configured as one stream during special reproduction, storage processing is simplified, and a required storage capacity can be reduced.

The above object of the present invention can be achieved by a transport stream reproduction method of the present invention for reading out a transport stream in which coded data is multiplexed and auxiliary information that contains recording position information of an access unit in a storage device, said access unit being a unit of access during random reproduction of the coded data, and for carrying out reproduction processing of the transport stream. The transport stream reproduction method is provided with the processes of: selectively determining the access unit that conforms to the reproduction condition as a reproduction target based on the auxiliary information when a reproduction command under a predetermined reproduction condition is received; reading out the access unit targeted for reproduction from the storage device; and configuring and outputting a reproduction transport stream.

According to the present invention, when a reproduction command under a predetermined reproduction condition is received, an access unit targeted for reproduction is determined by referring to auxiliary information, thereby configuring and outputting a reproduction transport stream. Therefore, a condition for reproducing part of a stored transport stream can be uniformly judged based on auxiliary information, thus making it possible to universally conform to a special reproduction condition such as particular reproduction without complicating a configuration.

In one aspect of the present invention, the method further comprises the process of newly generating configuration information on the reproduction transport stream and a program contained in the reproduction transport stream, wherein the process of configuring and outputting a reproduction transport stream outputs the newly generated configuration information with the reproduction transport stream.

According to this aspect, during decode processing for a reproduction transport stream, a data structure and a program configuration are analyzed in the same manner as normal stream decode processing. As a result, desired data can be decoded.

In another aspect of the present invention, the method further comprises the process of newly generating time reference information on a program contained in the reproduction transport stream, wherein the process of configuring and outputting a reproduction transport stream outputs the newly generated time reference information with the reproduction transport stream.

According to this aspect, during decode processing for a reproduction transport stream, a system clock is reproduced for such a transport stream in the same way as normal stream decode processing. Data can be decoded at a desired timing without any inconsistency on the resultant time axis.

In further aspect of the present invention, the method further comprises the process of generating reproduction time information for specifying a time for reproducing the access unit targeted for reproduction, wherein the process of configuring and outputting a reproduction transport stream outputs the generated reproduction time information with the reproduction transport stream.

According to this aspect, reproduction time information is generated and outputted to a reproduction transport stream in accordance with an advantageous effect similar to that according to the fourth aspect. Thus, a decode timing and a transfer timing that conform to a reproduction condition can be set for each access unit, enabling time management adaptive to special reproduction or the like.

In further aspect of the present invention, wherein the inputted transport stream is transmitted by the TS packet, and the process of generating reproduction time information generates the reproduction time information based on arrival time information assigned when the respective TS packets are stored.

According to this aspect, reproduction time information is generated based on TS packet arrival time information due to an advantageous effect similar to that according to the fifth aspect. Thus, reproduction time information can be simply calculated without retrieving and analyzing time axis information that originally exists in a stored transport stream.

In further aspect of the present invention, wherein the process of generating reproduction time information generates the reproduction time information in consideration of a frame display replacement in an original video stream of the access unit.

According to this aspect, reproduction time information is generated in consideration of a frame display replacement in an original video stream of an access unit in accordance with an advantageous effect similar to that according to the sixth aspect. Thus, reproduction time information for the access unit can be precisely calculated.

In further aspect of the present invention, the method further comprises the process of updating a parameter that assigns a storage amount of a virtual input buffer or a decode timing in the access unit targeted for reproduction by referring to a data quantity when the access unit targeted for reproduction is transferred.

According to this aspect of the present invention, an access unit delivery timing can be determined based on a parameter indicating a storage quantity of a virtual input buffer in an access unit or a decode timing in accordance with an advantageous effect similar to that according to the ninth aspect, precision of an access unit timing is improved, and special reproduction with high precision can be achieved.

In further aspect of the present invention, wherein the process of configuring and outputting a reproduction transport stream outputs the reproduction transport stream by associating an update value of the parameter with the reproduction time information.

According to this aspect, a reproduction transport is outputted after the above parameter has been updated in accordance with an advantageous effect similar to that according to the tenth aspect. Thus, an access unit transmission timing can be determined more easily.

In further aspect of the present invention, wherein the process of configuring and outputting a reproduction transport stream configures the reproduction transport stream by assigning each PES packet to each of the access units, and provides the reproduction time information as a PTS of the PES packet.

According to this aspect, time information PTS is provided to a PES packet assigned to an access unit in accordance with an advantageous effect similar to that according to the eleventh aspect, thus facilitating time management of each access unit during special reproduction or the like. Further, a more precious decoding/display timing can be specified.

BRIEF DESCRIPTION OF THE DRAWINGS

FIG. 1 is a block diagram showing an entire configuration of a digital broadcast receiving system according to an embodiment of the present invention;
FIG. 2 is a block diagram showing a schematic configuration of a storage and reproduction system in the digital broadcast receiving system;
FIG. 3 is a block diagram showing a configuration of a storage processing unit of the storage and reproduction system,
FIG. 4 is a block diagram showing a configuration of a reproduction processing unit of the storage and reproduction system;
FIG. 5 is a diagram showing a recording format when an MPEG2-TS is recorded in a storage medium;
FIG. 6 is a diagram showing a data structure of a VAU auxiliary information recorded in an auxiliary information

EP 1 187 134 A2

recording area for the storage medium;

FIG. 7 is a flow chart illustrating storage processing carried out in the storage and reproduction system;

FIG. 8 is a functional block diagram showing a video data analysis unit contained in the storage processing unit;

FIG. 9 is a diagram illustrating a concept of a video component analyzed at the video data analysis unit;

FIG. 10 is a flowchart illustrating special reproduction processing carried out in a storage and reproduction system;

FIG. 11 is a flow chart illustrating trick VAU determination processing in special reproduction processing;

FIG. 12 is a flow chart illustrating trick VAU transfer processing in special reproduction processing:

FIG. 13 is a diagram showing a specific example of a configuration of a TS packet row generated as a transfer target during trick VAU transfer processing;

FIG. 14 is a diagram illustrating a method for calculating a trick VAU delivery timing;

FIG. 15 is a functional block diagram showing a specific reproduction data trimming unit contained in the reproduction processing unit;

FIG. 16 is a flow chart illustrating a method for calculating a PTS according to the present embodiment; and

FIG. 17 is a diagram illustrating a display timing based on the PTS.

## DETAILED DESCRIPTION OF THE PREFERRED EMBODIMENTS

Hereinafter, preferred embodiments of the present invention will be described with reference to the accompanying drawings.

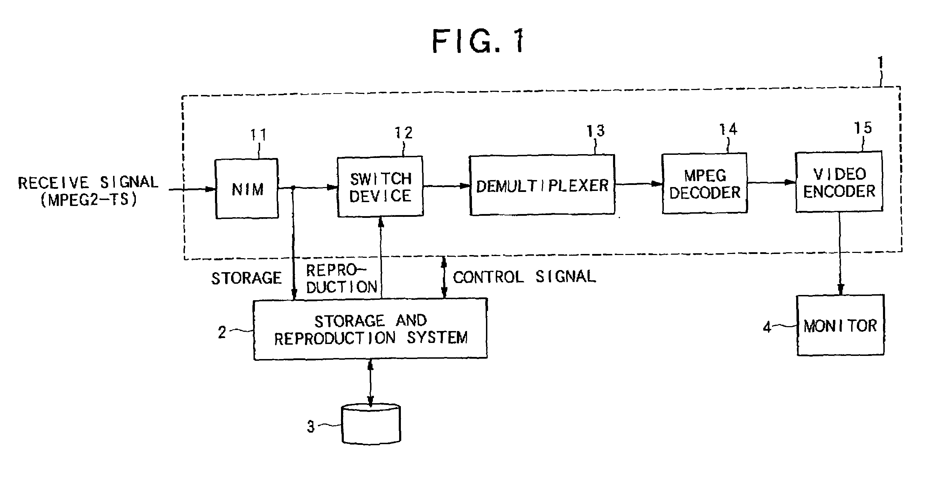

FIG. 1 is a block diagram showing an entire configuration of a digital broadcast receiving system that contains a storage and reproduction system according to the present invention. The digital broadcast receiving system shown in FIG. 1 is provided with: a digital broadcast receiving unit 1 for receiving an MPEG2-TS delivered as a digital broadcast; a storage and reproduction system 2 for controlling storage processing and reproduction processing of the received MPEG2-TS; a storage medium 3 serving as a storage device of the MPEG2-TS; and a monitor 4 serving as a device for displaying an image displayed and outputted based on the MPEG2-TS.

In FIG. 1, the digital broadcast receiving unit 1 is provided with: an NIM (Network Interface Module) 11; a switch device 12; a demultiplexer 13; an MPEG decoder 14; and a video encoder 15. In the above configuration, the NIM 11 applies decode processing/error correction processing to a digital broadcast receive signal received from the outside via a network, and extracts the MPEG2-TS in real time. The MPEG2-TS in the present embodiment is composed of a plurality of digital broadcast programs, and the corresponding stream is configured to be multiplexed. In addition, as a receive signal received at the NIM 11, for example, there are employed a variety of modes such as digital broadcast signal transmitted from a satellite broadcast via radio waves.

The MPEG2-TS outputted from the NIM 11 are supplied to each of the switch device 12 and the storage and reproduction system 2. That is, the MPEG2-TS is delivered from the NIM 11 via the switch device 12, whereby a digital broadcast can be displayed as an image in real time, and a desired MPEG2-TS can be stored in the storage medium 3 by means of the storage and reproduction system 2.

The switch device 12 outputs either one of MPEG2-TS from the NIM 11 and reproduction MPEG2-TS reproduced in the storage and reproduction system 2 by selectively switching it, At this time, a user makes predetermined operation for an operating device (not shown), whereby the user can selectively set the MPEG2-TS from the NIM 11 and a reproduction MPEG - TS from the storage and reproduction system 2.

The demultiplexer 13 extracts data on a program having a specific program number set thereto, out of a plurality of programs multiplied for the MPEG2-TS or separates video data or audio data configuring a respective one of these programs for each component, and outputs the extracted coded data.

In the present embodiment, the MPEG 2 scheme is employed as a data compression/encoding scheme. Thus, the MPEG decoder 14 applies decompression processing in accordance with the MPEG 2 scheme to coded data outputted from the demultiplexer. Then, the decompressed data outputted from the MPEG decoder 14 is converted into a determined format by means of the video encoder 15, and is outputted to be displayed on the externally connected monitor 4 to configure a display image.

In FIG. 1, the digital broadcast receiving unit 1 and the storage and reproduction system 2 are configured so that a predetermined control signal can be received/transmitted in order to mutually deliver an operating command or acquire an operating state. Control signals delivered to the storage and reproduction system 2 in accordance with a user's operation made at the digital broadcast receiving unit 1 include: a storage command signal for instructing the storage medium 3 to store the MPEG2-TS; a normal reproduction command signal for instructing a normal reproduction operation of the MPEG2-TS recorded in the storage medium 3; and a special reproduction command signal for instructing a special reproduction operation of the MPEG2-TS recorded in the storage medium 3.

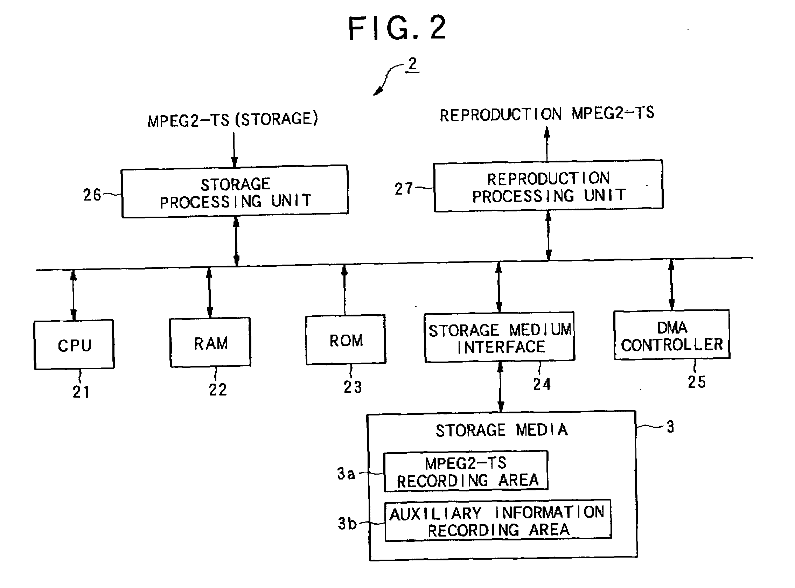

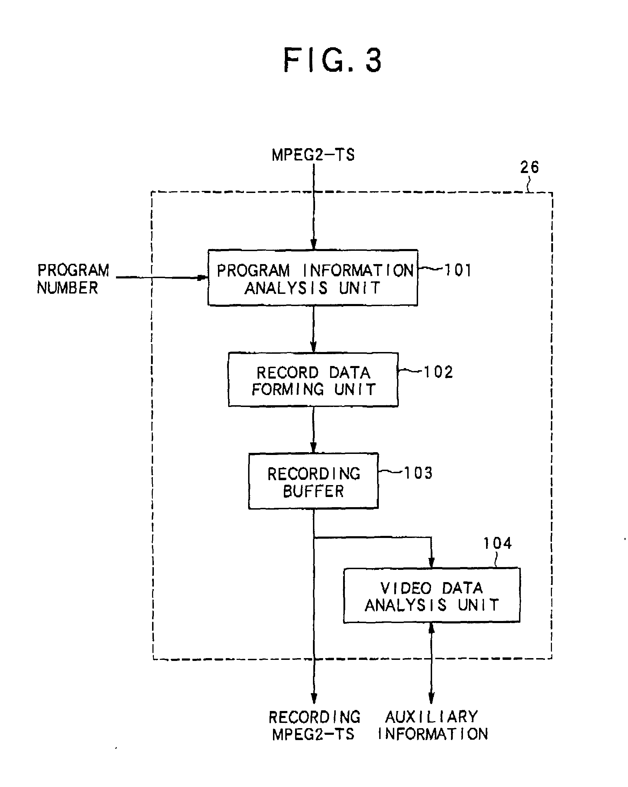

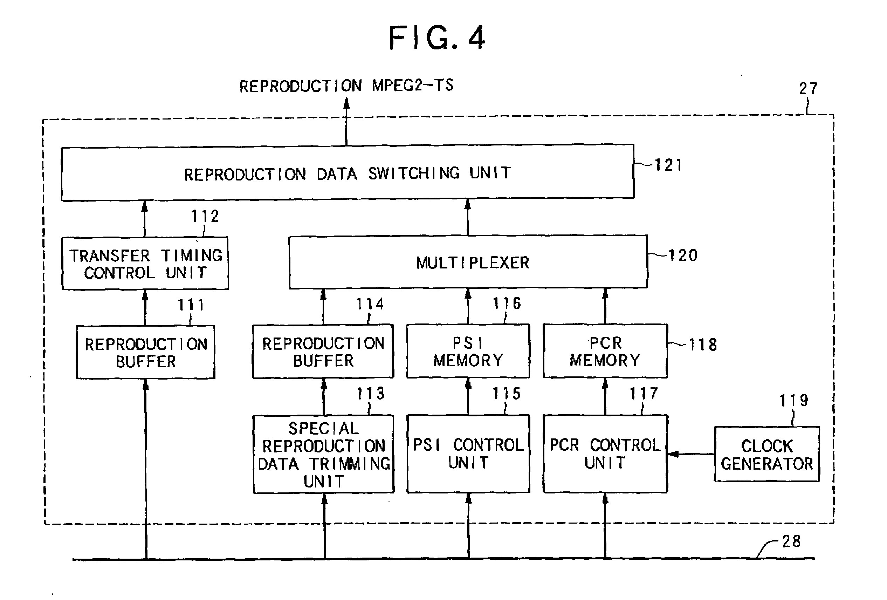

Now, a schematic configuration of a storage and reproduction system 2 in the above digital broadcast receiving system, will be described with reference to FIG. 2 to FIG. 4. FIG. 2 is a block diagram showing a schematic configuration of the storage and reproduction system 2. In addition. FIG. 3 is a block diagram showing a configuration of a storage processing unit 26 of the components contained in the storage and reproduction system 2 shown in FIG. 2. FIG. 4 is a block diagram showing a configuration of a reproduction processing unit 27.

As shown in FIG. 2, the storage and reproduction system 2 according to the present embodiment is provided with: a CPU 21; a RAM 22; a ROM 23; a storage medium interface 24 connected to a storage medium 3; a DMA controller 25; a storage processing unit 26; a reproduction processing unit 27; and a bus 28.

In the configuration shown in FIG. 2, the CPU 21 controls an operation of the entire storage and reproduction system 2. The CPU 21 reads out and executes a control program recorded in the ROM 23, and carries out control while data required for processing is temporarily maintained in the RAM 22. Then, the CPU 23 delivers a control signal to each component of the storage and reproduction system 2 via the bus 28.

The storage processing unit 26 analyzes the MPEG2-TS outputted from the NIM 11 shown in FIG. 1, analyzes the MPEG2-TS that corresponds to a program targeted for storage, and carries out storage processing for the storage medium 3.

Referring now to FIG. 3, a specific configuration of the storage processing unit 26 will be described here.

As shown in FIG. 3. the storage processing unit 26 is provided with: a program information analysis unit 101; a record data forming unit 102; a recording buffer 103; and a video data analysis unit 104.

In the above configuration, the program information analysis unit 101 analyzes a program configuration multiplexed in the inputted MPEG2-TS, and acquires the analysis result as program information. At this time, the program information analysis unit 101 extracts a PID (Packet Identifier) provided as identification information of TS packet described later, which comprises the MPEG2-TS. Individual streams contained in MPEG2-TS can be determined based on the PID provided to the TS packet.

The record data forming unit 102 selectively extracts and outputs a data portion of the specific program from MPEG2-TS in order to form record data relevant to a specific program having a predetermined program number in the MPEG2-TS. At this time, a time stamp as an arrival time information is affixed to a head portion relevant to each TS packet comprising the MPEG2-TS as record data. This time stamp is utilized for time management when a variety of processing functions are carried out in the storage and reproduction system 2.

The recording buffer 103 is a storage device for buffering the MPEG2-TS that is record data outputted from the record data forming unit 102. Record data is read out from the recording buffer 103 at a predetermined timing, and the read out data is transferred to the storage medium 3.

The video data analysis unit 104 analyzes a selected video component from among MPEG - TS maintained in the recording buffer 103, acquires information required for reproducing a desired video access unit (VAU), and generates and outputs auxiliary information based on the acquired information. Here, the video access unit is a unit of decoding and reproduction, and generally, corresponds to I picture data. In addition, the auxiliary information employed in the present embodiment contains trick VAU auxiliary information described later, which is utilized for special reproduction. In the present embodiment, a video access unit employed for special reproduction such as rewinding or fast forward winding is referred to as trick VAU. Specific analysis processing at the video data analysis unit 104 will be described later in detail.

Next, in FIG. 2, a reproduction processing unit 27 carries out reproduction processing of MPEG2-TS2 stored in the storage medium 3, and configures and outputs reproduction MPEG2-TS targeted for reproduction. Referring now to FIG. 4, a specific configuration of the reproduction processing unit 27 will be described here.

As shown in FIG. 4, the reproduction processing unit 27 is provided with: a reproduction buffer 111; a transfer timing control unit 112; a special reproduction data trimming unit 113; a reproduction buffer 114: a PSI control unit 115: a PSI memory 116; a PCR control unit 117; a PCR memory 118; a clock generator 119; a multiplexer 120; and a reproduction data switching unit 121.

In the above configuration, the reproduction buffer 111 is a storage device for buffering the MPEG2-TS targeted for reproduction, read out from the storage medium 3 during normal reproduction. In addition, the transfer timing control unit 112 carries out timing control for outputting the MPEG2-TS maintained in the reproduction buffer 111, and outputs the MPEG2-TS to be reproduced when a reproduction timing arrives. The reproduction buffer 111 and the transfer timing control unit 112 correspond to a path of MPEG2-TS when a normal reproduction command signal is received.

The specific reproduction data trimming unit 113 selectively reads out a video access unit and sequence header data described later from the storage medium 3 in accordance with trick VAU auxiliary information concerning a target for specific reproduction, and applies trimming processing for generating a TS packet string reconfigured for special reproduction. In addition, the reproduction buffer 114 is a storage device for buffering a TS packet string for special reproduction outputted from the special reproduction data trimming unit 113. The special reproduction data trimming unit 113 and the reproduction buffer 114 correspond to a path of MPEG2-TS when a special reproduction command signal is received. A specific processing function and configuration of the specific reproduction data trimming unit 113 will be described later in detail.

The PSI control unit 115 generates PSI (Program Specific Information) that is program configuration information described in a packet, and controls the generated information so as to be delivered to be included in part of the MPEG2-TS. For the PSI, table information representing a relationship between program components is specified. For example, the PSI includes a PAT (Program Association Table) that is a table that describes a MPEG2-TS program configuration or a PMT (Program Map Table) that describes information such as PID that is a component configuring each program. The PSI memory 116 temporarily maintains the PSI outputted from the PSI control unit 115 until a delivery timing has arrived.

The PCR control unit 117 generates a PCR (Program Clock Reference) as program time reference information, and controls the generated information so as to be delivered to be included in part of the MPEG2-TS at a predetermined timing. A 27 MHz system clock is supplied from the clock generator 119 to the PCR control unit 117, and a predetermined time on a time axis of STC (System Time Clock) that is a reference for synchronization is assigned. Then, the PCR memory 118 temporarily maintains the PCT outputted from the PCR control unit 117 until a delivery timing has arrived.

The multiplexer 120 arbitrates a delivery timing of: a TS packet string maintained in the reproduction buffer 114; the PCI maintained in the PSI memory 116; and PCR maintained in the PCR memory 118, respectively, and configures continuous MPEG2-TS. At this time, in the multiplexer 120, a priority when the respective delivery timings are coincided is set. Specifically, the priority of the PCR output is set to be the highest.

The reproduction data switching unit 121 selectively switches either one of the MPEG2-TS from the transfer timing control unit 112 and MPEG2-TS from the multiplexer 120, and outputs reproduction MPEG2-TS to the digital broadcast receiving unit 1. That is, in executing reproduction processing employing record data on the storage medium 3, when a normal reproduction command signal is received, the reproduction data switching unit 121 switches MPEG2-TS to that of the transfer timing control unit 112. When a special reproduction command signal is received, the reproduction data switching unit 121 switches MPEG2-TS to that of the multiplexer 120.

Now, turning to FIG. 2, a storage medium interface 24 carries out an interface operation when a variety of data are read out from or written into the storage medium 3. In the present embodiment, a hard disk that is a storage device with a large capacity, for example, is employed as the storage medium 3. In addition, a DMA controller 25 controls a DMA (Direct Memory Access) transfer operation when record data is transferred between each buffer of the storage and reproduction system 2 and the storage medium 3 via the bus 28.

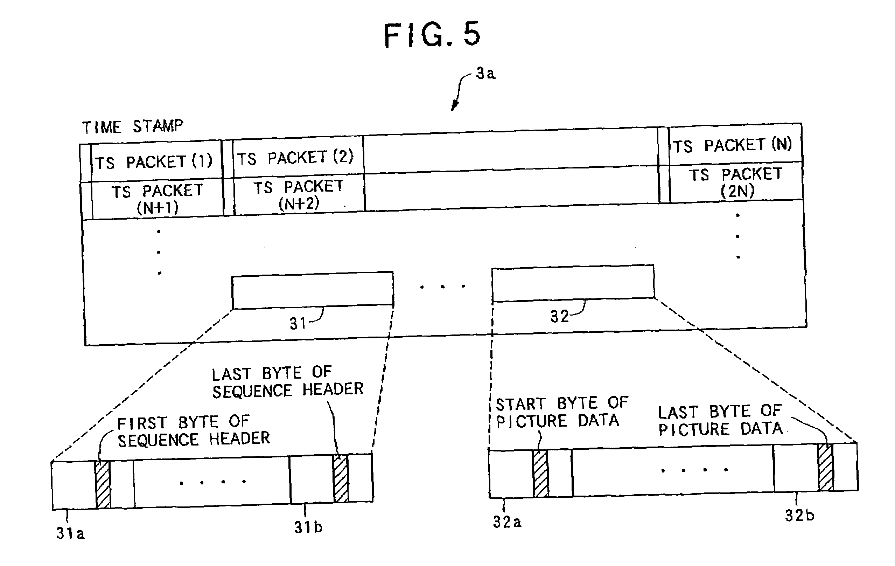

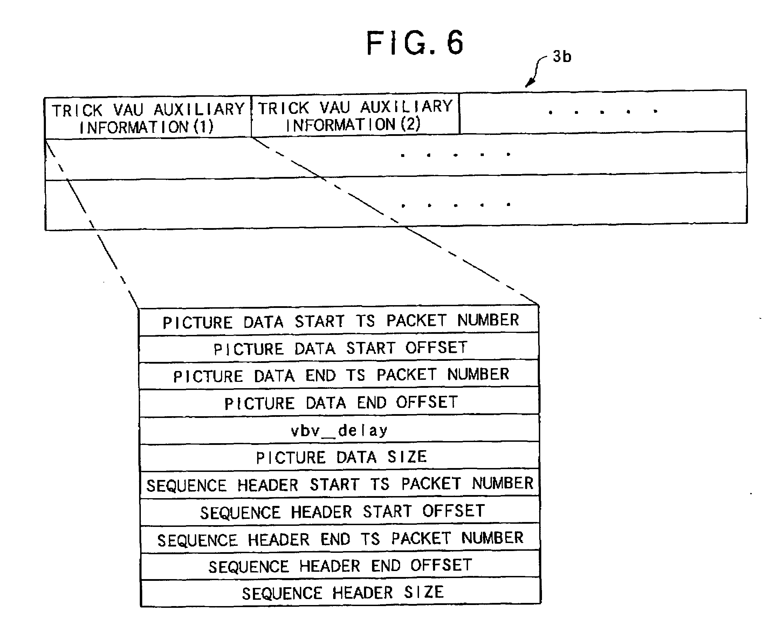

Now, referring now to FIG. 5 and FIG. 6, a recording format of the storage medium 3 in the present embodiment will be described here. FIG. 5 is a diagram showing a recording format when MPEG2-TS processed by the storage processing unit 26 is recorded in the storage medium 3. As shown in FIG. 5, MPEG2-TS to be recorded in the storage medium 3 is handled while a TS packet is defined as a data unit. Respective TS packets have a fixed data length of 188 bytes, and have a data structure in accordance with a predetermined format.

As shown in FIG. 5, in an MPEG2-TS recording area 3a of the storage medium 3, a plurality of TS packets each having logical or physical packet numbers are sequentially arranged. A time stamp is added to the head portion of each TS packet, as described above. By referring to this time stamp, the relative transmission timing of each TS packet in the received original MPEG2-TS can be determined. In addition, the main body portion of the TS packet includes video data or audio data in a subdivided form for each program.

In addition, in FIG. 5, a video sequence that is a data unit in a MPEG 2 hierarchical structure is configured over a plurality of continuous TS packets. The video sequence in the MPEG 2 includes one or more video frames, starting with a sequence header having a parameter for decoding/reproducing these video frames, and terminating with a sequence end code. A plurality of sequence headers can be inserted between the sequence header and the sequence end code.

The MPEG2-TS recording area 3a includes; a picture data recording area 32 in which a plurality of TS packets including specific picture data is recorded; and a sequence header recording area 31 in which a plurality of TS packets including proximal sequence header data preceding the picture data are recorded. In FIG. 5, although there are shown the picture data recording area 32 and the sequence header recording area 31 one by one, a plurality of the picture data recording areas 32 and sequence header recording areas 31 in such a relationship exist in the actual MPEG2-TS recording area 3a. In addition, the sequence header recording area 31 may include extension data in an MPEG sequence layer required for decoding/displaying picture data in addition to sequence header data. Hereinafter. a description will be given by showing an example when only sequence header data is contained.

As shown at the lower part of FIG. 5, in the sequence header recording area 31, sequence headers are recorded from a sequence-header-starting-byte stored at a position that has an offset from the recording position of the starting byte in the starting TS packet 31a, to the sequence-header-final-byte recorded at a position that has an offset from the recording position of the starting byte in the last TS packet 31b.

In addition, in the picture data recording area 32, picture data corresponding to a predetermined video access unit is recorded from a picture-data-starting-byte recorded at a position that has an offset from the recording position of the starting byte in the starting TS packet 32a, to picture-data-final-byte recorded at a position that has an offset from the recording position of the starting byte in the last TS packet 32b.

FIG. 6 is a diagram showing a data structure of trick VAU auxiliary information recorded in the auxiliary information recording area 3b of the storage medium 3. As described above, in the recording format shown in FIG. 5, in the case where a video access unit including an I picture employed for special reproduction is recorded, the trick VAU auxiliary information extracted by means of the video data analysis unit 104 is recorded in the auxiliary information recording area 3b. That is, the trick VAU auxiliary information is information that is referred to in order to judge a recording state of the trick VAU into the MPEG2-TS recording area 3a.

As shown in FIG. 6, the trick VAU auxiliary information corresponding to each video access unit for special reproduction is sequentially arranged in the auxiliary information area 3b of the storage medium 3 while numbers are provided respectively. The trick VAU auxiliary information is comprised of information concerning picture data and information concerning a sequence header, as shown at the lower part of FIG. 6.

Of the trick VAU auxiliary information, the information concerning picture data includes:

    a picture-data-start-TS-packet-number:
    a picture-data-start-offset;
    a picture-data-end-TS-packet-number;
    a picture-data-end-offset;
    a picture-data-size; and vbv_delay described later.

Taking the data structure shown in FIG. 5 for example, the picture-data-start-TS-packet-number indicates a number that is assigned to the TS packet 32a at the beginning of a predetermined picture data recording area 32. In addition, the picture-data-start-offset indicates an offset value of a recording position of a picture-data-starting-byte included in the above TS packet 32a. In addition, the picture-data-end-TS-packet-number indicates a number that is assigned to the last TS packet 32b. In addition, the picture-data-end-offset indicates an offset value at the recording position of the picture-data- final-byte included in the above TS packet 32b. In addition, the picture-data-size corresponds to a data size of picture data recorded in the picture data recording area 32.

Further, of the trick VAU auxiliary information, the information concerning a sequence header includes:

    a sequence-header-start-TS-packet-number;
    a sequence-header-start-offset;
    a sequence- header-end-TS-packet-number:
    a sequence-header-end-offset;
    and a sequence header size.

Taking the data structure shown in FIG. 5 for a example, the sequence-header-start-TS-packet-number indicates a number that is assigned to a TS packet 31a at the beginning of a predetermined sequence header recording area 31. In addition, the sequence-header-start-offset indicates an offset value at the recording position of a sequence-header-starting-byte included in the above TS packet 31a, In addition, the sequence-header-end-TS-packet-number indicates a number that is assigned to the last TS packet 31b. In addition, the sequence-header-end-offset indicates an offset value at the recording position of the sequence-header-final-byte included in the above TS packet 31b. In addition, the sequence-header-size corresponds to a data size of a sequence header recorded in the sequence header recording area 31.

Further, vbv_delay of the trick VAU auxiliary information is a parameter that expresses by time a storage quantity of a vertical input buffer in decoding a video access unit for special reproduction. By referring to this vbv_delay, a decode timing of a specific video access unit can be determined. In the present embodiment, during special reproduction, processing for rewriting vbv_delay is carried out so as to be adaptive to apicture data decode timing. A detailed description will be given later.

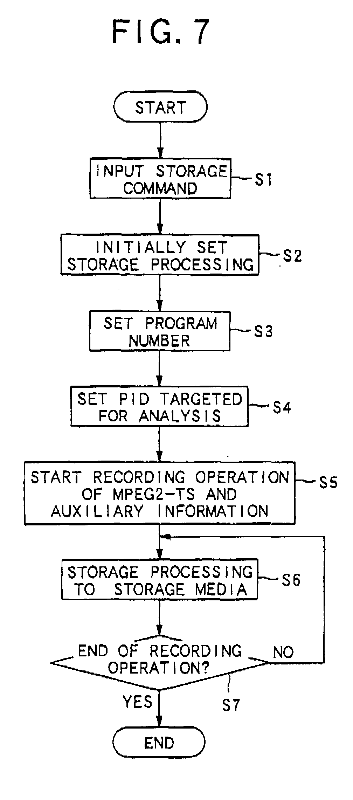

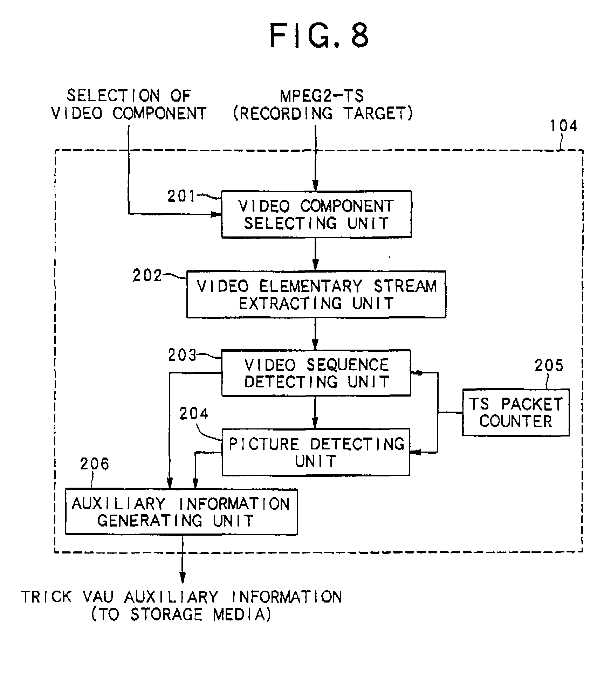

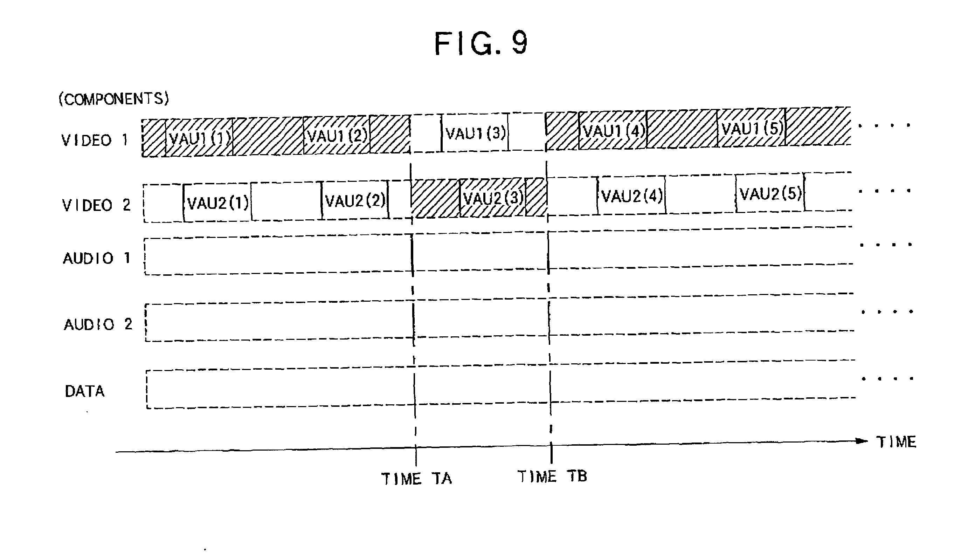

Now, storage processing carried out at the storage and reproduction system 2 will be described with reference to FIG. 7 to FIG. 9. FIG. 7 is a flow chart showing storage processing when the MPEG2-TS of a predetermined program received in a digital broadcast system is stored in the storage medium 3. FIG. 8 is a functional block diagram showing a video data analysis unit 104 of a storage processing unit 26. FIG. 9 is a diagram illustrating a concept of a video component analyzed at the video data analysis unit 104.

In the processing shown in FIG. 7, when a storage command is inputted with respect to a specific program (step S1), the subsequent storage processing is started. For example, when a program is specified by the user's operation, and a record button or the like is pressed, the corresponding storage command signal is delivered to the CPU 21 via the bus 28. The monitoring of the storage command signal at the step S1 is continuously carried out.

After storage command entry, initial settings required for recording the MPEG2-TS and trick VAU auxiliary information that corresponds to a program of the set program number are carried out (step S2). For example, a recording area in the storage medium 3 is allocated or a file for writing record data is provided.

Next, a program number of a program to be recorded is set at a program information analysis unit 101 (step S3). In this manner, at the program information analysis unit 101, a program targeted for recording is specified, and the data structure can be analyzed.

Next, of the MPEG2-TS analyzed at the program information analysis unit 101, the PID relevant to a stream to be stored is set as an analysis target of the video data analysis unit 104 (step S4). The PID to be set to the program information analysis unit 101 can be determined by referring to the PSI contained in the MPEG2-TS, In this manner, in the video data analysis unit 104, it is possible to analyze a video elementary stream described later based on the PID, thereby generating trick VAU auxiliary information.

Next, an operation for recording MPEG2-TS and auxiliary information that corresponds to a program targeted for recording into the storage medium 3 is started (step S5). The MPEG2-TS is outputted from the recording buffer 103, and is written into the MPEG2-TS recording area 3a. The auxiliary information is outputted from the video data analysis unit 104, and is written into an auxiliary information recording area 3b. Then, storage processing for the storage medium 3 is sequentially carried out sequentially (step S6). In the case where a recording operation terminates (step S7: YES), the storage processing shown in FIG. 7 is terminated. In the case where a recording operation does not terminate yet (step S7: NO), processing reverts to the step S6 at which storage processing is continued.

As shown in the functional block diagram of FIG. 8, the video data analysis unit 104 contained in the storage processing unit 26 is provided with: a video component selecting unit 201; a video elementary stream extracting unit 202; a video sequence detecting unit 203; a picture detecting unit 204; a TS packet counter 205; and an auxiliary information generating unit 206.

In the above configuration, the video component selection unit 201 selects as an analysis target a TS packet that coincides with a specified video component of the MPEG2-TS, which is targeted for recording and inputted to the video data analysis unit 104. The video component corresponds to a TS packet string that configures a specified stream of the selected program, and is identified by PID. Then, in the case where the video component is indicated in accordance with the user's operation or in the case where a program configuration of the received digital broadcast is updated, a change is made at a predetermined timing. A change of the video component caused by an elapse of time is indicated for the video component selecting unit 201 immediately.

Now, a selection of the above video data component will be described with reference to FIG. 9. FIG. 9 shows an example when five components configuring a specific program, i.e., video 1, video 2, audio 1, audio 2, and data are contained. These components are multiplexed into the MPEG2-TS, and can be identified by the specific PID provided to the respective components. Therefore, a desired component can be selected from among the programs by specifying a PID. As shown in FIG. 9, video access units represented by VAU 1 and VAU 2, respectively, are sequentially transmitted to video 1 and video 2 that are video components as assigned by numbers in the figure.

In FIG. 9, for an actually selected video component, video 1 or video 2 is switched with an elapse of time. That is, for example, assume that a portion shaded in FIG. 9 is selected by the user's operation. Namely, this assumption corresponds to a case in which selected video 1 is switched into video 2 at time Ta, and then, is switched again to video 1 at time Tb. In the present embodiment, a new stream is reconfigured from the MPEG2-TS corresponding to a video component switched from moment to moment, the configured new stream is targeted for analysis, and trick VAU auxiliary information is generated. Therefore, an image actually seen by the user can be reproduced as a target for special reproduction.

Next, the video elementary stream extracting unit 202 analyzes a packet structure of TS packet group obtained from the video component selection unit 201, and extracts a video elementary stream that should be targeted for analysis.

The video sequence extracting unit 203 detects a video sequence that is a hierarchical structure of the MPEG 2, as described above, from the video elementary stream extracted at the video elementary stream extracting unit 2. Then, recording position information on a sequence header disposed as shown in FIG. 5 is determined, and the determined information is outputted as a component of the trick VAU auxiliary information. At this time, a number assigned to a TS packet being processed (refer to FIG. 5) is inputted from a TS packet counter 205 in the video sequence detecting unit 203, and the correlation between the inputted number and a video sequence can be identified.

The picture detecting unit 204 further detects picture data that corresponds to an I picture. In this case as well, the recording position information on picture data that corresponds to disposition as shown in FIG. 5 is determined, and the determined information is outputted as a component of the trick VAU auxiliary information. To the picture detecting unit 204 as well, a number assigned to a TS packet is inputted from the above described TS packet counter 205.

The auxiliary information generating unit 206 integrates trick VAU auxiliary information outputted from each of the video sequence detecting unit 203 and picture detecting unit 204, and generates the trick VAU auxiliary information shown in FIG. 6 to output it. That is, a data string composed of each item of information concerning a sequence header and each item of information concerning picture data is delivered to the storage medium 3, and the delivered data string is written into the auxiliary information recording area 3b.

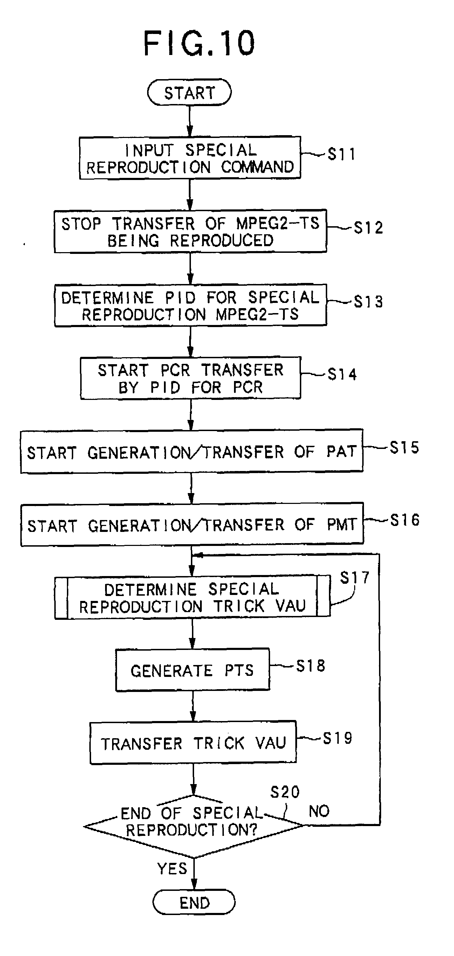

Now, special reproduction processing carried out in the storage and reproduction system 2 will be described with reference to FIG. 10. FIG. 10 is a flow chart showing a case in which special reproduction processing such as fast forward winding or rewinding is executed while MPEG2-TS recorded in the storage medium 3 is reproduced.

In FIG. 10, when a special reproduction command is inputted during reproduction (step S11), the subsequent special reproduction processing is started. For example, when a fast forward winding or rewinding function button is pressed at a predetermined timing by the user's operation during reproduction, the corresponding reproduction command signal is delivered to the CPU 21 via the bus 28. Subsequently, an operation for transferring the MPEG2-TS2 from the storage medium 3 being reproduced to the reproduction processing unit 27 is stopped (step S12).

Next, a PID assigned to an MPEG2-TS targeted for special reproduction is determined (step S13). At the step S13, it is required to determine the video component PID for specifying a target for special reproduction, a PID for PCR employed for a time reference, and the PID for the above PMT, respectively.

Next, under the control of the PCR control unit 117, transfer of PCR is started by the PID for PCR determined at the step S13 (step S14). Subsequently, transfer of PCR is carried out with predetermined time intervals, and thus, a time can be defined on the STC time axis during decode processing of the MPEG2-TS.

Next, under the control of the PSI control unit 115, a PAT describing a program configuration is generated based on the PID for PMT determined at the step S13, and the packet transfer is started (step S15). In addition, the video component determined at the step S13 used for special reproduction, the PID for PCR, and the PMT describing the current program number are generated, they are defined as a TS packet having the PID for PMT determined at the step S13, and transfer is started (step S16).

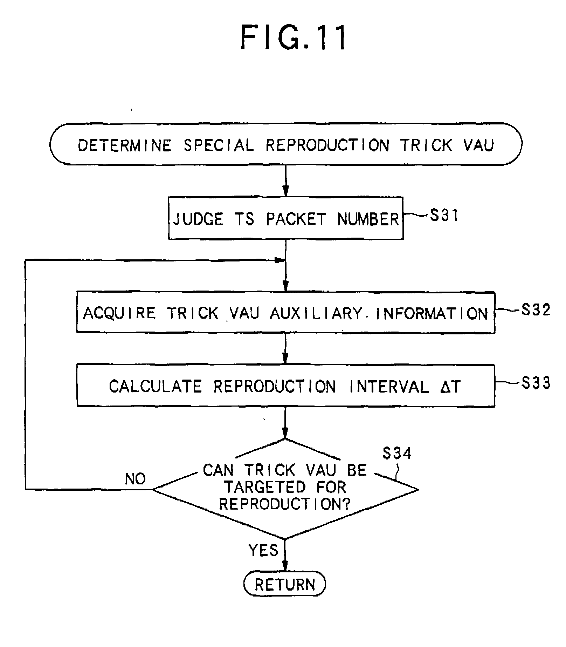

Next, processing for determining trick VAU that is a video access unit employed for special reproduction is carried out (step S 17). Here, processing for determining trick VAU at the step S17 will be specifically described with reference to the flow chart shown in FIG. 11.

When the trick VAU determination processing shown in FIG. 11 is started, the number assigned to a TS packet employed during the current or previous reproduction processing is determined (step S31). In this manner, special reproduction can be started while a time at which transfer is stopped at the step S12 shown in FIG. 10 is defined as a reference.

Next, search for an auxiliary information recording area 3b of the storage medium 3 is carried out in order to select the next reproduction candidate based on the number determined at the step S31, and desired trick VAU auxiliary information is acquired (step S32). In the case of special reproduction, as described above, a TS packet containing the I picture is selected as a reproduction candidate. The recording position of a TS packet of the storage medium 3 can be determined based on the VAU auxiliary information acquired at the step S32. In the case where special reproduction is fast forward winding, the auxiliary information recording area 3b may be forwardly searched for. In the case where special reproduction is rewinding, the auxiliary information recording area 3b may be backwardly searched for.

Next, based on a reproduction timing of the preceding trick VAU reproduced immediately before a trick VAU as a new reproduction candidate and a reproduction timing of the trick VAU as the new reproduction candidate, a reproduction interval t between these timings is calculated (step S33). The reproduction interval t calculated at the step S33 is determined depending on the conditions such as fast forward winding or rewinding steed. A specific calculation method will be described later.

Next, it is determined whether or not a trick VAU defined as a reproduction candidate, as described above, is actually targeted for reproduction based on the reproduction interval t calculated at the step S33 (step S34). This determination can be effected in accordance with a variety of conditions. For example, the determination can be effected depending on the conditions such as whether or not a time required for carrying out specific reproduction processing is allocated as the reproduction interval t or whether or not the reproduction interval t is within the range that the user *can be* visually identified. When YES is judged at the step S34, and the trick VAU targeted for reproduction is determined, processing goes to the step S18 shown in FIG. 10. On the other hand, in the case where NO is determined at the step S34, and the trick VAU cannot be targeted for reproduction, processing at the step S32 and subsequent is repeated.

Next, in FIG. 10, a PTS (Presentation Time Stamp) that corresponds to the trick VAU determined as a reproduction target at the step S17 is generated (step S18). This PTS is a time stamp that represents a decode timing and display timing of a trick VAU on the time axis of STC assigned by the PCR to be additionally transferred. A specific PTS calculation method will be described later.

Next, processing for transferring the trick VAU determined as a reproduction target is carried out (step S19). Specific processing at the step S19 will be described later. One trick VAU corresponds to one video sequence, and is transferred to be included in a TS packet string generated at the special reproduction data trimming unit 113. Then, it is determined whether or not special reproduction processing corresponding to a special reproduction command terminates (step S20). If the determination result is negative (step S20: NO), processing returns to the step S17. When the determination result is affirmative, (step S20: YES), the processing shown in FIG. 10 is terminated.

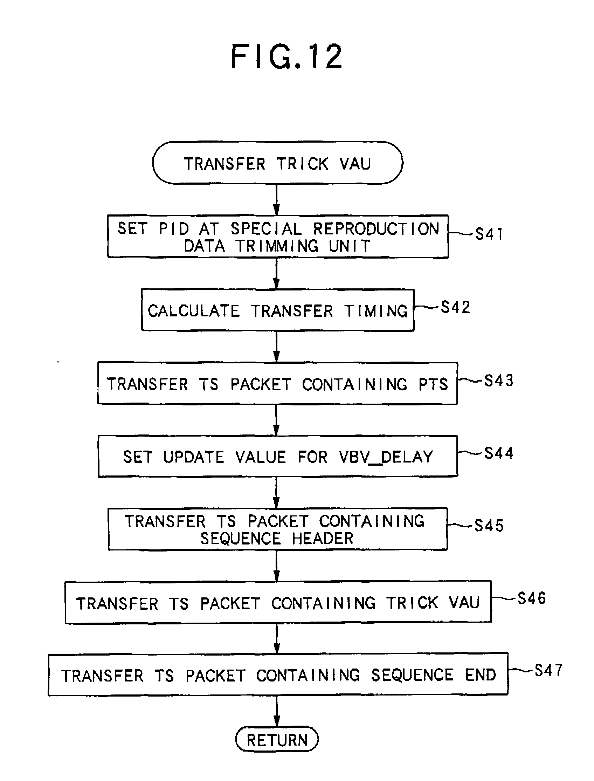

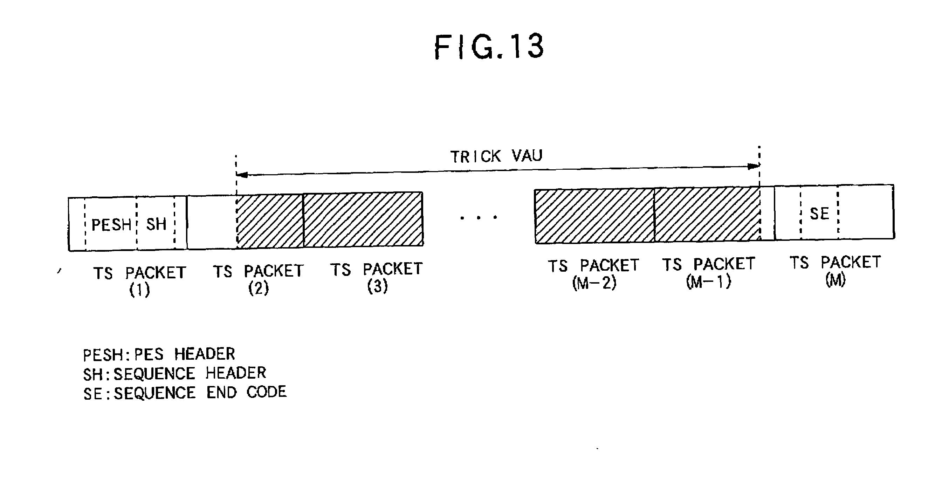

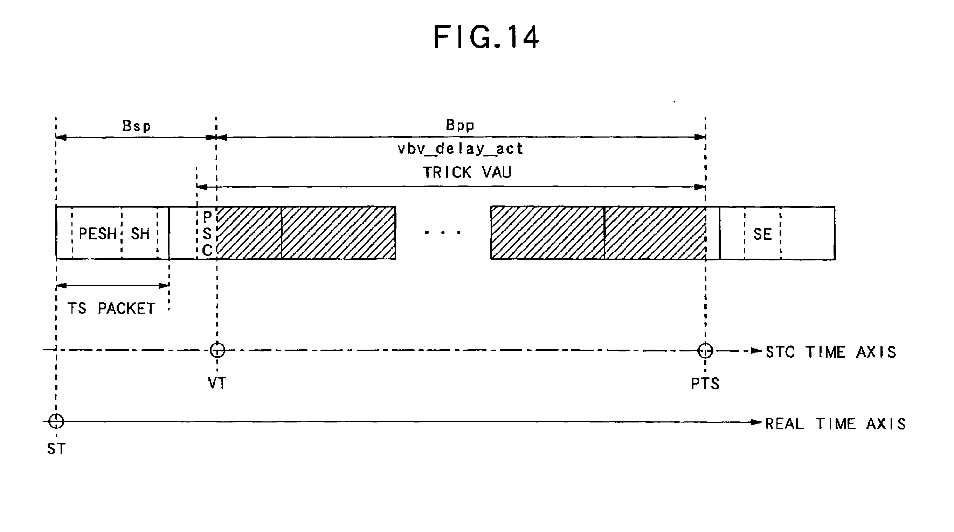

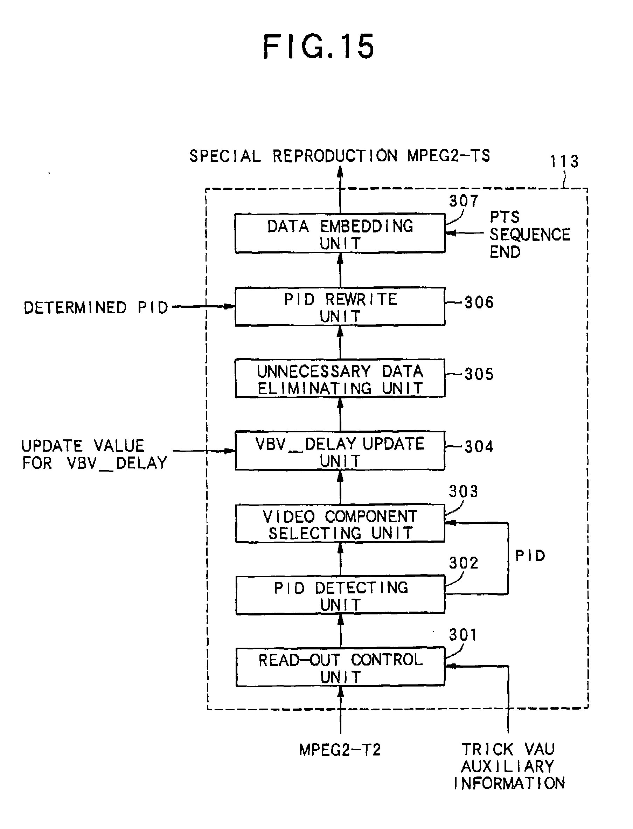

Now, processing for transferring a trick VAU at the step S19 will be specifically described with reference to FIG. 12 to FIG. 15. FIG. 12 is a flow chart showing the transfer processing at the step S19. FIG. 13 is a diagram showing a specific example of a configuration of a TS packet string generated as a transfer target at the step S19. FIG. 14 is a diagram illustrating a method for calculating a delivery timing of a trick VAU. FIG. 15 is a functional block diagram showing a special reproduction data trimming unit 113 of a reproduction processing unit 27.

First, trick VAU transfer processing will be described with reference to FIG. 12 and FIG. 13. When the processing shown in FIG. 12 is started, the PID determined at the step S13 shown in FIG. 10 is set at the special reproduction data trimming unit 113 (step S41). That is, a TS packet containing a trick VAU selected during special reproduction may have a variety of PIDs. The setting at the step S41 is provided to the special reproduction data trimming unit 113, whereby the TS packet string containing each trick VAU transferred during special reproduction is determined at the step S13 shown in FIG. 10, and is unified in a common video PID described in a PMT to be transferred.

Next, a transfer timing for transferring a packet of video sequences corresponding to a trick VAU is calculated (step 42). In the present embodiment, one video sequence configures the above described TS packet string as well as one PES packet (Packetized Elementary Stream Packet) and is transferred. That is, the components of this PES packet are divided into at a plurality of TS packets and transferred. Therefore, it is required to define scheduling for transferring individual TS packets in consideration of the respective transfer speeds or data sizes. A specific method for calculating a transfer timing will be described later.

Next, a PES header is generated, in which the PTS generated as described above corresponding to a trick VAU is described, and a TS packet containing the generated PES header is transferred (step S43).

Here, in FIG. 13, there is shown a TS packet string for transferring a trick VAU targeted for transfer. For the sake of convenience, in FIG. 13, although a number assigned to the TS packet, it is found that one trick VAU is transferred by employing M continuous TS packets in total. Then, the above PES header (PESH) is contained in the corresponding TS packet (1) at the step S43, wherein PTS is described.

In FIG. 12, vbv-delay defined in MPEG as a parameter which provides the decode timing of each picture in a video elementary stream hierarchy, is calculated as a proper update value relevant to each trick VAU during special reproduction. Then, the update value is set at the special data trimming unit 113 (step S44). In this manner, an I picture corresponding to the trick VAU can be decoded at a timing adaptive to special reproduction.

Next, a TS packet containing a sequence header to be added at the beginning of a video sequence is transferred (step S45). In an example shown in FIG. 13, a sequence header (SH) is contained in the TS packet (1). In this case, both of the PES header and sequence header are transferred by means of the TS packet (1). In actuality, the TS packets containing them may be integrated or separated according to data arrangement.

Next, a TS packet containing a trick VAU that is a main frame of a video sequence is transferred (step S46). As shaded in FIG. 13, the data length of the TS packet is only 188 bytes, and thus, one trick VAU is divided by a number of TS packets to be transferred.

Next, a TS packet containing a sequence end code to be added at the end of a video sequence is transferred (step S45), and the processing shown in FIG. 12 is terminated. In an example shown in FIG. 13, a sequence end code (SE) is contained in the last TS packet (M).

In this way, one video sequence from a sequence header to a sequence end code via a trick VAU is transferred by employing a continuous TS packet. In addition, this video sequence is defined as a PES packet, and the PES header is added, whereby a PTS for specifying a decode timing and display timing can be set relevant to such each trick VAU.

Now, a method of calculating a specific transfer timing in transfer processing of trick VAU will be described with reference to FIG. 14. In the present embodiment, in order to prevent inconsistency caused in the case where a bit rate when MPEG2-TS is recorded in the storage medium 3, i.e., a bit rate of actually broadcast transfer streams, and a bit rate during special reproduction of a trick VAU differ from each other, a delivery timing is calculated in accordance with the method as described below.

In FIG. 14, it is assumed that a data size of a trick VAU contained in the TS packet string configured in the same manner as in FIG, 13 is defined as Bpp (bit). This Bpp corresponds to a picture data size contained in the trick VAU auxiliary information on the auxiliary information recording area 3b. In addition, the PTS generated as described above corresponds to a decode and display time of a trick VAU on the STC time axis if a B picture is not contained.

At this time, vbv_delay_act that is an update value of vbv_delay considering actual delivery processing is obtained by the formula below:

$$vbv\_delay\_act = 90\ k \times Bpp/Ra \tag{1}$$

where Ra (bps) denotes an actual delivery bit rate specified at the reproduction processing unit 27. In the above formula, 90k corresponds to 300 divided frequencies of the 27 MHz system clock, and is defined as a reference for vbv_delay.

Next, in FIG. 14, a trick-VAU-delivery-start-timing VT indicating a timing at which the head of the trick VAU is started to be delivered on the STC time axis is obtained in accordance with the formula below by employing the result obtained by formula (1).

$$VT = PTS\text{-}vbv\_delay\_act \qquad (2)$$

Next, in FIG. 14, the delivery start timing ST at which the delivery of the first TS packet of the TS packet string is started on the real time axis is obtained in accordance with the formula below by employing the result obtained by formulas (1) and (2):

$$ST = VT/90k - Bsp/Ra \qquad (3)$$

where Bsp (bit) denotes a picture start code (PSC), and denotes a data size totaling PRESH, SH or the like added prior to the trip VAU.

In this way, the delivery start timing ST is acquired in accordance with formula (3). Then, during special reproduction, at the delivery start timing ST on the real time, when delivery of the TS packet string is started, data is sequentially delivered at a real delivery bit rate Ra, and the delivery is completed at the time of PTS, thereby making it possible to decode the data.

Now, functions of the special reproduction data trimming unit 113 that plays an important role in transfer of a trick VAU, as described above, will be described here with reference to FIG. 15. As shown in FIG. 15, the special reproduction data trimming unit 113 is provided with: a read-out control unit 301; a PID detecting unit 302; a video component selecting unit 303; a vbv_delay update unit 304; an unnecessary data eliminating unit 305; a PID rewrite unit 306; and a data embedding unit 307.

In the above configuration, the read-out control unit 301 provides an access to the storage medium 3, and reads out trick VAU auxiliary information that corresponds to a special reproduction command from the auxiliary information recording area 3a. Based on the read out information, this control unit determines a recording position of the MPEG2-TS recording area 3a, and reads out predetermined recording data.

The video PID detecting unit 302 detects a PID for each trick VAU and sequence header data relevant to MPEG2-TS that is record data read out at the read-out control unit 301. and sequentially outputs the detected PID.

The video component selecting unit 303 selectively outputs a TS packet string consisting of a video component that corresponds to a predetermined PID of the above MEG 2 - TS while referring to the detected PID at the video PID detecting unit 302. That is, a component unnecessary for special reproduction such as audio data or PSI data is eliminated from components each configuring the MPEG2-TS by means of the vide component selecting unit 303.

The vbv_delay update unit 304 detects a vbv_delay field of a trick VAU that corresponds to the video component selected at the video component selecting unit 303. replaces the detected field with an update value of vbv_delay obtained at the step S44, and update the value.

The unnecessary data eliminating unit 305 eliminates unnecessary data in order to generate a TS packet string shown in FIG. 13 from the TS packet strings each corresponding to the above trick VAU. That is, during special reproduction in the present embodiment, PCR and PED headers are newly generated, thus making it necessary to delete data on the PCR or PES header contained in original record data. Therefore, at this time. old data is eliminated.

The PID rewrite unit 306 sequentially rewrites PIDs of TS packets each configuring a trick VAU into a PID set at the step S41. In this manner, a TS packet string containing a trick VAU to be transferred during special reproduction is unified in a specific PID.

The data embedding unit 307 embeds a PES header at which a PTS indicating a reproduction time is described, relevant to the TS packet string that corresponding to the trick VAU, and embeds a sequence end code that consists of a predetermined bit pattern. That is, a TS packet string having the data structure shown in FIG. 13 is generated, a trick VAU is configured as one video sequence, and further, one PTS is assigned.

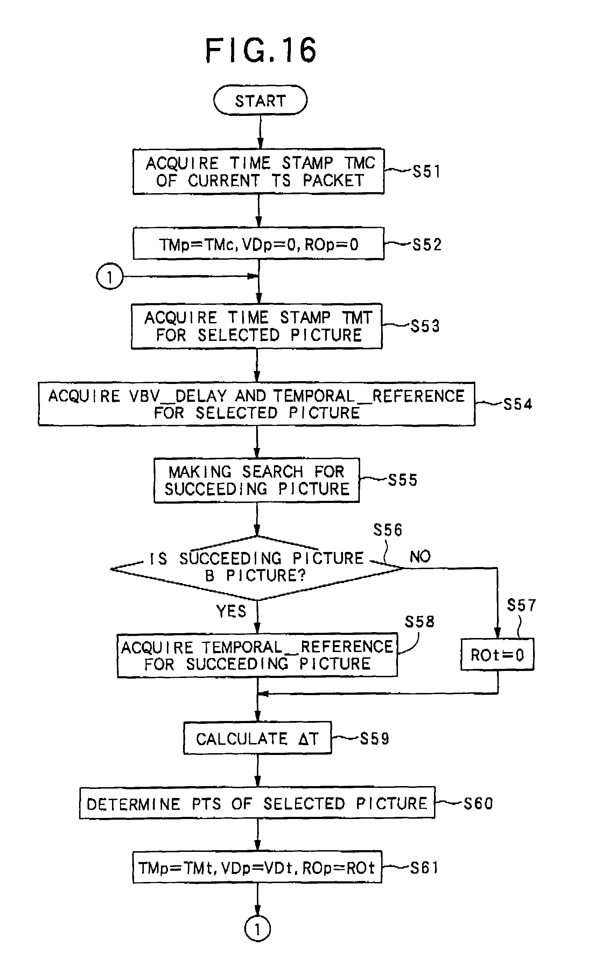

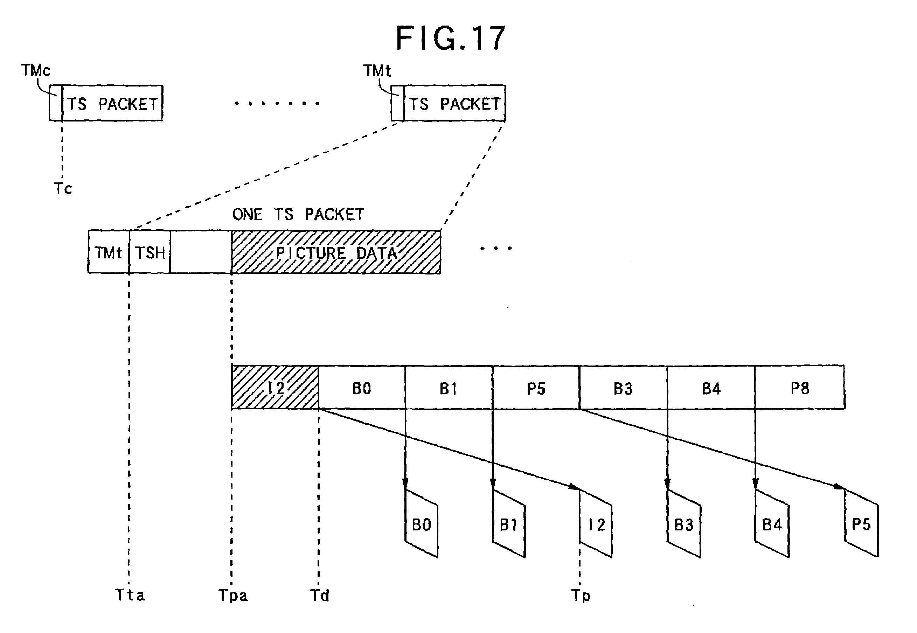

Now, a method for calculating a PTS assigned to each trick VAU, as described above, will be described with reference to FIG. 16 and FIG. 17. FIG. 16 is a flow chart illustrating PTS calculation processing according to the present embodiment. FIG. 17 is a diagram illustrating a PTS based display timing.

When the processing shown in FIG. 16 is started, a time stamp TMc added to the current TS packet is acquired in reading out MPEG2-TS recorded in the storage medium 3 (step S51). Then, the time stamp TMp, vbv_delay value VDp, and display replacement delay ROp are initially set as parameters relevant to the preceding pictures employed for calculation described later (step S52). TM = TMc, VDp = 0, and ROp = 0 are set, respectively.

Next, the first TS packet is determined, which contains a select picture selected as an I picture targeted for display by referring to trick VAU auxiliary information, and the time stamp TMt added to this packet is acquired (step S53).

That is, as shown in FIG. 17, assume that the time stamp TMc added to a predetermined TS packet corresponds to the current time Tc, and an I picture after a predetermined time has elapsed through a plurality of TS packets is selected as a display target. At this time, the time stamp TMt added to the first TS packet of the TS packet string having the I picture contained therein corresponds to an arrival time Tta of that TS packet. A TS packet header TSH is contained in the head part of the TS packet having the time stamp TMt added thereto, and the I picture data is contained in the main body portion of the TS packet. In FIG. 17, there is shown that a timing at which the I picture data arrives is obtained as a picture arrival time Tpa.

In FIG. 16, the picture header of the above selected picture is analyzed, and vbv_delay and temporal_reference are acquired from the parameters described in the header (step S54). The vbv_delay represents a delay time required for decode processing, and temporal_reference represents a display timing of each picture based on replacement processing of MPEG 2.

At the lower part of FIG. 17, there is shown an example when the display order of sequentially read out pictures is replaced. That is, following an I picture I2 selected as a display target, there are recorded in the storage medium 3 in order B pictures B0 and B1, P picture P5, B pictures B3 and B4, and P picture P8. However, these pictures are replaced in numeric order when they are displayed. That is, B pictures B0 and B1, I picture I2, B pictures B3 and B4, and P picture P5 are displayed in order. This is because P pictures employ the past frame for prediction, and B pictures employ the past and future frames for prediction relevant to the I picture that can be decoded independently. As a result, as shown in FIG. 17, in the case where a B picture following I picture exists, a display time Tp is delayed relevant to the I picture decoding time Td with display order replacement.

In FIG. 16, the subsequent picture following the above selected pictures is searched for from the storage medium 3 in order to consider display order replacement of I pictures (step S55). Then, it is determined whether or not the subsequent picture following a selected picture is a B picture (step S56). That is, the determination at the step S56 is carried out because an I picture display timing is changed depending on whether or not a B picture immediately after an I picture exists.

When the determination result at the step S56 is NO, there is no need to consider display order replacement of I pictures. Thus, a display replacement delay ROt for the selected pictures is set to 0 prior to calculation described later (step S57).

When the determination result at the step S56 is YES, the picture header of the searched succeeding pictures is analyzed in order to cope with the display order replacement of I pictures, and temporal_reference is acquired (step S58).

Next, a reproduction interval $\Delta t$ up to a display time Tp of a selected picture is calculated in order to determine PTS of the selected picture (step S59). Here, the reproduction interval $\Delta t$ at the step S59 can be calculated in accordance with the formula below:

$$\Delta t = (TMt - TMp)/SC + (VDt - VDp)/90k + (ROt - ROp)/FF \qquad (4)$$

where TMt denotes a time stamp of the first TS packet of a selected picture; TMc denotes a time stamp of the start TS packet of the preceding picture, SC denotes a sampling clock (Hz); FF denotes a frame frequency (Hz); VDt denotes a vbv_delay value of a selected picture; VDp denotes a vbv_delay value of the preceding picture; and ROt denotes a display replacement delay of a selected picture.

$$(ROt = TRt - TRn + 1)$$

where TRt denotes a temporal_reference value of a selected picture; TRn denotes a temporal_reference vale of the subsequent value: and ROp denotes a display replacement delay of the preceding picture.

$$(ROp = TRpt - TRpn + 1)$$

where TRpt denotes a temporal_reference value of the preceding picture; and TRpn denotes a temporal_reference value of the preceding picture.

Next, PTS of a picture selected as a trick VAU is determined based on the calculation result obtained at the step S59 (step S60). The PTS determined at the step S60 corresponds to PTS generated at the step S18 shown in FIG. 10.

As described above, in the case of determining PTS, calculation is carried out by utilizing a time stamp of a TS packet, Thus, processing for making a search for recorded PTS or PCR is eliminated, and processing is simplified. In addition, with respect to the reproduction interval t calculated in accordance with formula (4), a time of TPa - Tta relevant to the I picture targeted for display in FIG. 17 is obtained as an error. However, this error does not exceed one TS packet transfer time even if it is maximal, and thus, sufficient precision of PTS can be allocated.

The above described embodiment has described a case in which the present invention is applied to a storage and reproduction system for storing/reproducing a transport stream in which compression/encoding is applied in accordance with the MPEG 2 scheme. However, the present invention can be widely applied to a storage and reproduction system in which coded data is multiply transmitted in accordance with a variety of schemes without being limited thereto.

As has been described above, according to the present invention, a transport stream in which coded data is multiplexed is analyzed for each access unit while the stream is stored, and auxiliary information is generated. A reproduction transport stream is composed of an access unit selected based on the auxiliary information. Thus, there can be provided a storage and reproduction system in which a burden on data search processing such as special reproduction is reduced, and reproduction adaptive to a desired reproduction condition can be easily achieved. Further, a stream that conforms to the MPEG Standard or the like is generated, and thus, a decoding/display device side enables reproduction through processing that is not remarkably different from that during normal reproduction operation.

The invention may be embodied in other specific forms without departing from the spirit or essential characteristics thereof. The present embodiments are therefore to be considered in all respects as illustrative and not restrictive, the scope of the invention being indicated by the appended claims rather than by the forgoing description and all changes which come within the meaning and range of equivalency of the claims are therefore intended to be embraces therein.

## Claims

1. A storage and reproduction system for carrying out storage processing and reproduction processing of a transport stream (MPEG2-TS) in which coded data is multiplexed, **characterized in that** said storage and reproduction system comprises:

   a storage control device (26) for, when a storage command is received, sequentially storing coded data in a storage device (3), said coded data corresponding to the storage command among inputted transport stream;
   an auxiliary information generating device (104) for analyzing said coded data for each access unit (VAU) that is an access unit during random reproduction, and generating auxiliary information containing recording position information contained in the storage device: and
   a reproduction control device (27) for, when a reproduction command under a predetermined reproduction condition is received, selectively determining the access unit that conforms to the reproduction condition as a reproduction target based on the auxiliary information, and reading out the access unit targeted for reproduction from the storage device, thereby configuring and outputting a reproduction transport stream.

2. The storage and reproduction system according to claim 1, wherein the reproduction control device newly generates configuration information (PCI) on a program contained in the reproduction transport stream and the reproduction transport stream, and outputs the configuration information with the reproduction transport stream.

3. The storage and reproduction system according to claim 1 or 2, wherein the reproduction control device newly generates time reference information (PCR) on a program contained in the reproduction transport stream, and outputs the time reference information with the reproduction transport stream.

4. The storage and reproduction system according to claim 3, wherein the reproduction control device generates reproduction time information (PTS) for specifying a time for reproducing the access unit targeted for reproduction, and outputs the reproduction time information with the reproduction transport stream.

5. The storage and reproduction system according to claim 4, wherein the reproduction transport stream is transmitted by the TS packet, and the reproduction control device generates the reproduction time information based on arrival time information assigned when the respective TS packets are stored.

6. The storage and reproduction system according to claim 4, wherein the reproduction control device generates the reproduction time information in consideration of a frame display replacement in an original video stream of the access unit.

7. The storage and reproduction system according to any one of claims 1 to 6, wherein the coded data is video data compressed and coded in accordance with an MPEG 2 scheme, and the access unit targeted for reproduction contained in the reproduction transport stream is obtained as a single video sequence.

8. The storage and reproduction system according to claim 1, wherein coded data on one or more programs having one or more components is multiplexed in the inputted transport stream, and the auxiliary information generating device selectively reconfigures a stream from the inputted transport stream according to designation of the program or component, and generates the auxiliary information where the access unit contained in the stream is defined as an analysis target.

9. The storage and reproduction system according to claim 4, wherein the reproduction control device updates a parameter (vbv_delay) that assigns a storage amount of a virtual input buffer or a decode timing in the access unit targeted for reproduction by referring to a data amount of the access unit, which is targeted for reproduction and is transferred.

10. The storage and reproduction system according to claim 9, wherein the reproduction control device outputs the reproduction transport stream by associating the update value of the parameter with the reproduction time information.

11. The storage and reproduction system according to claim 4 or 5, wherein the reproduction control device configures the reproduction transport stream by assigning each PES packet to the respective access units, and provides the reproduction time information as a PTS of the PES packet.

12. A transport stream storage method for storing a transport stream (MPEG2-TS) in which coded data is multiplexed, **characterized in that** said transport stream storage method comprises the processes of:

    sequentially storing coded data in a storage device (3) when a storage command is received, said coded data corresponding to the storage command among inputted transport stream;
    analyzing said coded data for each access unit (VAU) that is an access unit during random reproduction: and generating auxiliary information containing recording position information in the storage device.

13. The transport stream storage method according to claim 12, wherein coded data on one or more programs having one or more components is multiplexed in the inputted transport stream, and the process of generating auxiliary information selectively reconfigures a stream from inputted transport stream according to designation of the program or component, and generates the auxiliary information where the access unit contained in the stream is defined as an analysis target.

14. A transport stream reproduction method for reading out a transport stream in which coded data is multiplexed and auxiliary information that contains recording position information of an access unit in a storage device, said access unit being a unit of access during random reproduction of the coded data, and for carrying out reproduction processing of the transport stream, **characterized in that** said transport stream reproduction method comprises the processes of:

    selectively determining the access unit that conforms to the reproduction condition as a reproduction target based on the auxiliary information when a reproduction command under a predetermined reproduction condition is received;
    reading out the access unit targeted for reproduction from the storage device; and
    configuring and outputting a reproduction transport stream.

15. The transport stream reproduction method according to claim 14, further comprising the process of newly generating configuration information on a program contained in the reproduction transport stream and the reproduction transport stream,
    wherein the process of configuring and outputting a reproduction transport stream outputs the newly generated configuration information (PCI) with the reproduction transport stream.

16. The transport stream reproduction method according to claim 14 or 15, further comprising the process of newly generating time reference information (PCR) on a program contained in the reproduction transport stream,
    wherein the process of configuring and outputting a reproduction transport stream outputs the newly generated time reference information with the reproduction transport stream.

17. The transport stream reproduction method according to claim 16, further comprising the process of generating reproduction time information (PTS) for specifying a time for reproducing the access unit targeted for reproduction,

**EP 1 187 134 A2**

wherein the process of configuring and outputting a reproduction transport stream outputs the generated reproduction time information with the reproduction transport stream.

18. The transport stream reproduction method according to claim 17, wherein the inputted transport stream is transmitted by the TS packet, and the process of generating reproduction time information generates the reproduction time information based on arrival time information assigned when the respective TS packets are stored.

19. The transport stream reproduction method according to claim 17, wherein the process of generating reproduction time information generates the reproduction time information in consideration of a frame display replacement in an original video stream of the access unit.

20. The transport stream reproduction method according to claim 17, further comprising the process of updating a parameter that assigns a storage amount of a virtual input buffer or a decode timing in the access unit targeted for reproduction by referring to a data amount of the access unit, which is targeted for reproduction and is transferred.

21. The transport stream reproduction method according to claim 20, wherein the process of configuring and outputting a reproduction transport stream outputs the reproduction transport stream by associating an update value of the parameter with the reproduction time information.

22. The transport stream reproduction method according to claim 17 or 18, wherein the process of configuring and outputting a reproduction transport stream configures the reproduction transport stream by assigning each PES packet to each of the access units, and provides the reproduction time information as a PTS of the PES packet.

**17**

# FIG. 1

RECEIVE SIGNAL (MPEG2-TS) → NIM (11) → SWITCH DEVICE (12) → DEMULTIPLEXER (13) → MPEG DECODER (14) → VIDEO ENCODER (15)

STORAGE   REPRODUCTION   CONTROL SIGNAL

STORAGE AND REPRODUCTION SYSTEM (2)

MONITOR (4)

1

3

EP 1 187 134 A2

# FIG. 2

_2_

MPEG2-TS (STORAGE)  REPRODUCTION MPEG2-TS

26 — STORAGE PROCESSING UNIT

27 — REPRODUCTION PROCESSING UNIT

CPU — 21

RAM — 22

ROM — 23

STORAGE MEDIUM INTERFACE — 24

DMA CONTROLLER — 25

STORAGE MEDIA — 3

3a — MPEG2-TS RECORDING AREA

3b — AUXILIARY INFORMATION RECORDING AREA

# FIG. 3

MPEG2-TS

26

PROGRAM
NUMBER

PROGRAM INFORMATION
ANALYSIS UNIT ～101

RECORD DATA
FORMING UNIT ～102

RECORDING
BUFFER ～103

104

VIDEO DATA
ANALYSIS UNIT

RECORDING        AUXILIARY
MPEG2-TS      INFORMATION

FIG. 4

REPRODUCTION MPEG2-TS

21

# FIG. 5

EP 1 187 134 A2

# FIG. 6

3b

| TRICK VAU AUXILIARY INFORMATION (1) | TRICK VAU AUXILIARY INFORMATION (2) | . . . . . . |
| --- | --- | --- |
| | . . . . . | |
| | . . . . . | |

| |
| --- |
| PICTURE DATA START TS PACKET NUMBER |
| PICTURE DATA START OFFSET |
| PICTURE DATA END TS PACKET NUMBER |
| PICTURE DATA END OFFSET |
| vbv_delay |
| PICTURE DATA SIZE |
| SEQUENCE HEADER START TS PACKET NUMBER |
| SEQUENCE HEADER START OFFSET |
| SEQUENCE HEADER END TS PACKET NUMBER |
| SEQUENCE HEADER END OFFSET |
| SEQUENCE HEADER SIZE |

EP 1 187 134 A2

# FIG. 7

```
        ┌──────────┐
        │  START   │
        └──────────┘
              │
              ▼
    ┌──────────────────┐
    │ INPUT STORAGE    │──── S1
    │    COMMAND       │
    └──────────────────┘
              │
              ▼
    ┌──────────────────┐
    │  INITIALLY SET   │──── S2
    │ STORAGE PROCESSING│
    └──────────────────┘
              │
              ▼
    ┌──────────────────┐
    │  SET PROGRAM     │──── S3
    │    NUMBER        │
    └──────────────────┘
              │
              ▼
    ┌──────────────────┐
    │ SET PID TARGETED │──── S4
    │  FOR ANALYSIS    │
    └──────────────────┘
              │
              ▼
  ┌──────────────────────────┐
  │ START RECORDING OPERATION │──── S5
  │     OF MPEG2-TS AND       │
  │  AUXILIARY INFORMATION    │
  └──────────────────────────┘
              │
              ▼
    ┌──────────────────┐
    │STORAGE PROCESSING │──── S6
    │ TO  STORAGE MEDIA │
    └──────────────────┘
              │
              ▼
        ╱ END OF RECORDING ╲     NO
        ╲   OPERATION?     ╱────────┐
              │                     │
            YES   S7                │
              │                     │
              ▼                     │
        ┌──────────┐                │
        │   END    │                │
        └──────────┘
```

# FIG. 8

SELECTION OF
VIDEO COMPONENT

MPEG2-TS
(RECORDING TARGET)

104

201 — VIDEO COMPONENT
SELECTING UNIT

202 — VIDEO ELEMENTARY STREAM
EXTRACTING UNIT

203 — VIDEO SEQUENCE
DETECTING UNIT

205

TS PACKET
COUNTER

204

PICTURE DETECTING
UNIT

206

AUXILIARY INFORMATION
GENERATING UNIT

TRICK VAU AUXILIARY INFORMATION
(TO STORAGE MEDIA)

# FIG. 9

(COMPONENTS)

VIDEO 1: VAU1(1) VAU1(2) VAU1(3) VAU1(4) VAU1(5) · · · · ·

VIDEO 2: VAU2(1) VAU2(2) VAU2(3) VAU2(4) VAU2(5) · · · · ·

AUDIO 1 · · · · ·

AUDIO 2 · · · · ·

DATA · · · · ·

TIME

TIME TA    TIME TB

EP 1 187 134 A2

# FIG.10

START

INPUT SPECIAL
REPRODUCTION COMMAND  —S11

STOP TRANSFER OF MPEG2-TS
BEING REPRODUCED  —S12

DETERMINE PID FOR SPECIAL
REPRODUCTION MPEG2-TS  —S13

START PCR TRANSFER
BY PID FOR PCR  —S14

START GENERATION/TRANSFER OF PAT  —S15

START GENERATION/TRANSFER OF PMT  —S16

DETERMINE SPECIAL
REPRODUCTION TRICK VAU  —S17

GENERATE PTS  —S18

TRANSFER TRICK VAU  —S19

END OF SPECIAL
REPRODUCTION?  S20  NO

YES

END

# FIG.11

```
DETERMINE SPECIAL REPRODUCTION TRICK VAU

        JUDGE TS PACKET NUMBER ─── S31

   ACQUIRE TRICK VAU AUXILIARY INFORMATION ─── S32

      CALCULATE REPRODUCTION INTERVAL ΔT ─── S33

                                     S34
          CAN TRICK VAU BE
    NO    TARGETED FOR
          REPRODUCTION?

          YES
        RETURN
```

# FIG.12

```
          ( TRANSFER TRICK VAU )
                    │
                    ▼
   ┌──────────────────────────────┐
   │ SET PID AT SPECIAL REPRODUCTION │──S41
   │     DATA TRIMMING UNIT          │
   └──────────────────────────────┘
                    │
                    ▼
   ┌──────────────────────────────┐
   │  CALCULATE TRANSFER TIMING   │──S42
   └──────────────────────────────┘
                    │
                    ▼
   ┌──────────────────────────────┐
   │ TRANSFER TS PACKET CONTAINING PTS │──S43
   └──────────────────────────────┘
                    │
                    ▼
   ┌──────────────────────────────┐
   │ SET UPDATE VALUE FOR VBV_DELAY │──S44
   └──────────────────────────────┘
                    │
                    ▼
   ┌──────────────────────────────┐
   │  TRANSFER TS PACKET CONTAINING │──S45
   │       SEQUENCE HEADER          │
   └──────────────────────────────┘
                    │
                    ▼
   ┌──────────────────────────────┐
   │ TRANSFER TS PACKET CONTAINING TRICK VAU │──S46
   └──────────────────────────────┘
                    │
                    ▼
   ┌──────────────────────────────┐
   │ TRANSFER TS PACKET CONTAINING SEQUENCE END │──S47
   └──────────────────────────────┘
                    │
                    ▼
              ( RETURN )
```

# FIG.13

EP 1 187 134 A2

TRICK VAU

| PESH | SH | | | | ... | | | SE |

TS PACKET (1)   TS PACKET (2)   TS PACKET (3)   ...   TS PACKET (M-2)   TS PACKET (M-1)   TS PACKET (M)

PESH:PES HEADER
SH:SEQUENCE HEADER
SE:SEQUENCE END CODE

# FIG.14

Bsp

Bpp

vbv_delay_act

TRICK VAU

| PESH | SH | | P S C | | ... | | | SE | |

TS PACKET

STC TIME AXIS

VT

PTS

REAL TIME AXIS

ST

# FIG.15

SPECIAL REPRODUCTION MPEG2-TS   113

DATA EMBEDDING UNIT — 307   ← PTS SEQUENCE END

DETERMINED PID → PID REWRITE UNIT — 306

UNNECESSARY DATA ELIMINATING UNIT — 305

UPDATE VALUE FOR VBV_DELAY → VBV_DELAY UPDATE UNIT — 304

VIDEO COMPONENT SELECTING UNIT — 303

PID DETECTING UNIT — 302   } PID

READ-OUT CONTROL UNIT — 301

MPEG2-T2       TRICK VAU AUXILIARY INFORMATION

# FIG.16

```
              START

ACQUIRE TIME STAMP TMC          S51
   OF CURRENT TS PACKET

TMp=TMc, VDp=0, ROp=0           S52

  1

ACQUIRE TIME STAMP TMT          S53
   FOR SELECTED PICTURE

ACQUIRE VBV_DELAY AND TEMPORAL_REFERENCE    S54
         FOR SELECTED PICTURE

   MAKING SEARCH FOR            S55
   SUCCEEDING PICTURE

                                S56
    IS SUCCEEDING PICTURE              NO
        B PICTURE?

   YES                                       S57

ACQUIRE TEMPORAL_REFERENCE      S58      ROt=0
   FOR SUCCEEDING PICTURE

   CALCULATE ΔT                 S59

DETERMINE PTS OF SELECTED PICTURE    S60

TMp=TMt, VDp=VDt, ROp=ROt       S61

   1
```

# FIG.17

TMc

TS PACKET    · · · · · · ·    TS PACKET

TMt

Tc

ONE TS PACKET

| TMt | TSH | | PICTURE DATA | · · · |

| I2 | B0 | B1 | P5 | B3 | B4 | P8 |

B0    B1    I2    B3    B4    P5

Tta        Tpa        Td        Tp

EP 1 187 134 A2